Europäisches Patentamt

European Patent Office

Office européen des brevets

(19)

(11) Numéro de publication : **0 469 977 A1**

# (12) DEMANDE DE BREVET EUROPEEN

(21) Numéro de dépôt : **91402110.0**

(22) Date de dépôt : **29.07.91**

(51) Int. Cl.⁵ : **E03D 9/10,** E03D 5/00,
B64D 11/02, C02F 9/00

(30) Priorité : **03.08.90 FR 9009998**

(43) Date de publication de la demande :
**05.02.92 Bulletin 92/06**

(84) Etats contractants désignés :
**DE GB IT NL**

(71) Demandeur : **LE BOZEC ET GAUTIER**
**11, rue Paul-Bert**
**F-92400 Courbevoie (FR)**

(72) Inventeur : **Song, Chimeng**
**11 avenue de la Terrasse**
**F-94200 Saint Maur des Fosses (FR)**
Inventeur : **Tertre, Dominique**
**87 rue Eugène Labiche**
**F-78290 Croissy sur Seine (FR)**

(74) Mandataire : **Hammond, William**
**Cabinet CORRE & HAMMOND 17 rue Pasteur**
**F-92300 Levallois (FR)**

(54) **Installation sanitaire à dépression munie d'un épurateur de fluides gazeux.**

(57)    Installation à dépression pour traiter des fluides chargés, comportant au moins une canalisation (2) d'amenée des dits fluides chargés, une cuve (4) de rétention des matières solides et liquides, une conduite (5) d'évacuation des gaz de la cuve (4) à un épurateur (6) relié d'une part à l'air extérieur par un tube (7) et d'autre part à la canalisation (2) par un tuyau de recyclage (10).
Application aux sanitaires d'aéronefs.

FIG. 1

EP 0 469 977 A1

L'invention concerne les installations sanitaires à dépression, notamment celles prévues dans les aéronefs évoluant dans une atmosphère à basse pression, tandis que l'intérieur de la cabine est pressurisée, c'est-à-dire maintenue à pression normale même à haute altitude.

Ces installations émettent des fluides gazeux chargés d'impuretés, notamment sous forme d'aérosols ou de brouillards, qui sont rejetés dans l'atmosphère. Ces rejets d'impuretés engendrent des perturbations, du fait de phénomènes de corrosion, givrage etc.., inadmissibles en particulier sur les avions. En outre les rejets peuvent comprendre des bactéries dangereuses notamment pour la santé humaine.

Pour remédier à ces inconvénients et à d'autres, les inventeurs ont mis au point une installation à dépression (notamment pour aéronefs) pour traiter des fluides chargés, issus de sanitaires, comprenant des gaz, des matières solides et liquides, comportant notamment au moins une canalisation d'amenée des dits fluides chargés reliée aux sanitaires, une cuve de rétention reliée à la dite canalisation pour récupérer les matière solides et liquides, une conduite d'évacuation des gaz dont une extrémité débouche au-dessus de la cuve, installation caractérisée par le fait que l'autre extrémité de la dite conduite d'évacuation des gaz débouche dans un épurateur relié d'une part à l'air extérieur sous pression réduite par un tube pur évacuer les gaz épurés et, d'autre part à la canalisation d'amenée ou à la cuve par un tuyau de recyclage véhiculant les impuretés recueillies par le dit épurateur.

De préférence la cuve est surmontée d'une enceinte dans laquelle débouchent la ou les canalisations d'amenée des fluides chargés et la conduite d'évacuation des gaz vers l'épurateur.

L'enceinte précitée est dénommée séparateur et est constituée par un cyclone dont le centre est occupé par l'embouchure de la conduite d'évacuation des gaz vers l'épurateur.

L'épurateur est constitué par une boîte cylindrique fermée à axe vertical A' A avec une entrée des fluides à épurer, et une sortie des fluides épurés, des moyens internes pour filtrer les fluides, des moyens pour rassembler les impuretés dans te fond de la boîte, dispositif épurateur caractérisé par te fait que la boîte comporte deux chambres parallèles dites haute et basse, un filtre horizontal à coatescence séparant les deux chambres, une conduite axiale d'amenée des fluides à épurer traversant un orifice axial d'entrée, ta chambre haute et te filtre pour déboucher dans la chambre basse, un moyen d'évacuation des impuretés rassemblées à ta partie inférieure de la boîte et un tube évacuant les fluides gazeux épurés à partir d'un orifice de sortie prévue au sommet de la chambre haute.

La boîte constituant l'épurateur est fomrée de deux demi-boîtes dites haute et basse munies de moyens pour les solidariser l'une sur l'autre de façon étanche tout en tolérant leur séparation suivant un plan perpendiculaire à l'axe A' A, la demi-boîte haute en forme générale de couvercle à grande jupe détermine la chambre haute et comporte les orifices d'entrée et sortie percés dans son plafond, la demi-boîte basse détermine la chambre basse dont le fond comporte un trou d'évacuation des liquides et impuretés.

La boîte contient le filtre à travers lequel le fluide à épurer est obligé de passer. Ce filtre est du type à coalescence, en forme de disque épais à grand trou axial, et est enchâssé dans un carter ayant également un trou axial. La plaque supérieure du carter présente des orifices dont ta superficie est inférieure à la superficie des orifices de ta plaque inférieure. L'ensemble du filtre et de son carter constitue une cartouche indépendante, emboîtable dans l'ouverture de la demi-boîte supérieure. Par le trou axial passe le fluide gazeux à épurer, et une pièce en forme d'hélice procure au fluide une force centrifuge. Cette hélice peut être fixée dans te trou du carter et du filtre, ou à l'extrémité de la conduite d'amenée des gaz à travers le dit trou jusque dans la chambre basse. Sous l'effet de la force centrifuge, les impuretés et les gouttelettes se rassemblent puis coulent sur le fond de la boîte. Les fluides gazeux débarrassés de leurs plus grosses impuretés, sont alors aspirés à travers le filtre à coalescence et évacués à l'extérieur depuis la chambre haute.

Un panier est situé dans la chambre basse et est muni de moyens pour rassembler les liquides et impuretés. Le dit panier comporte une gaine appuyée sur ses parois latérales, et/ou une pièce fixée sur ou sous son fond en une matière se laissant imprégner par les gouttelettes de liquides, par exemple de la mousse à pores ouverts.

Divers agencements internes sont possibles, par exemple le filtre avec ou sans hélice peut être fixé au sommet du panier afin que l'ensemble forme une unité facilement manipulable et interchangeable en une seule opération.

La partie inférieure du fond de la demi-boîte basse comporte un ajutage muni d'un éjecteur avec entrée d'air ambiant intérieur au véhicule, engendrant une force motrice d'entraînement des impuretés dans le tuyau de recyclage de l'éjecteur à la canalisation ou à la cuve.

L'éjecteur comporte un clapet anti-retour

Pour mieux faire comprendre l'invention il et donné ci-après un exemple de réalisation, en référence aux dessins annexés dans lesquels :

Fig. 1 est un schéma d'installation sanitaire pour avion,

Fig. 2 est une coupe axiale d'un épurateur,

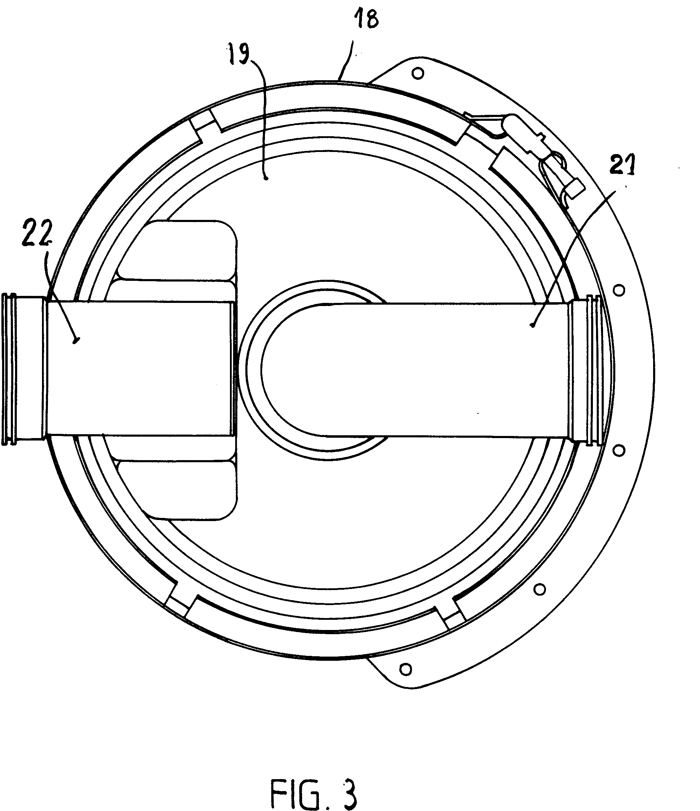

Fig. 3 est une vue de dessus de l'épurateur,

Fig. 4 est une vue éclatée du filtre et de son carter.

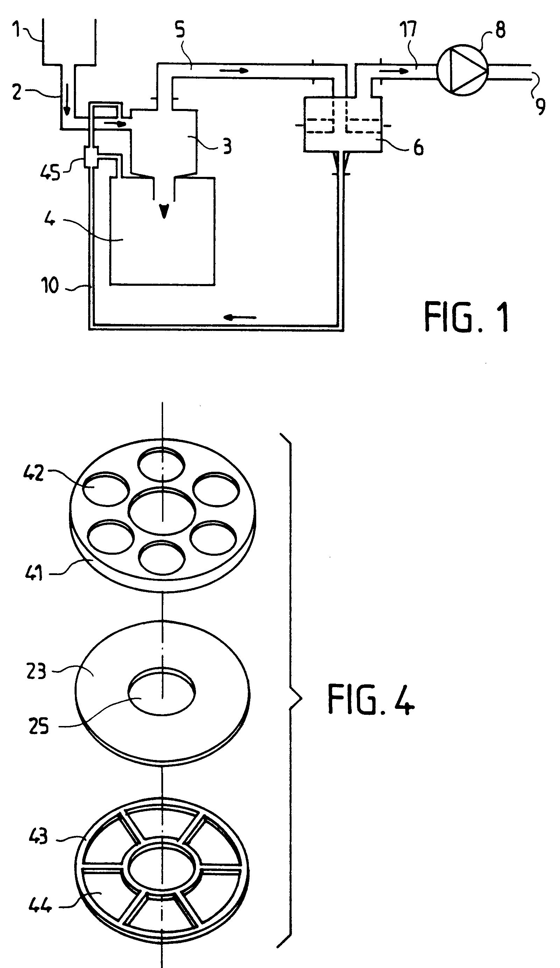

La fig. 1 comprend :

– une cuvette de W.C. 1

– une canalisation d'évacuation 2,

– un séparateur centrifuge de déchets et d'eaux usées 3 auquel aboutit la canalisation 2,

– une cuve 4 placée sous la déparateur et recevant les matières liquides et solides tombant du séparateur 3,

– une conduite 5 évacuant du séparateur 3 les fluides gazeux chargés de brouillard et d'impuretés légères,

– un épurateur 6 auquel aboutit la conduite 5 des fluides gazeux à épurer,

– un tube 7 dirigeant les fluides gazeux épurés vers l'extérieur du véhicule (ou vers une pompe)

– une pompe 8 accélérant l'évacuation des fluides épurés et assurant une dépression dans l'épurateur 6, particulièrement utile lorsque la pression extérieure est peu différente de la pression interne de l'aéronef.

– un orifice 9 de sortie dans l'atmosphère des fluides épurés,

– un tuyau 10 récupérant les impuretés (liquides et solides) à la base de l'épurateur 6 et les injectant dans la canalisation 2, de manière à être rassemblées dans la cuve 4.

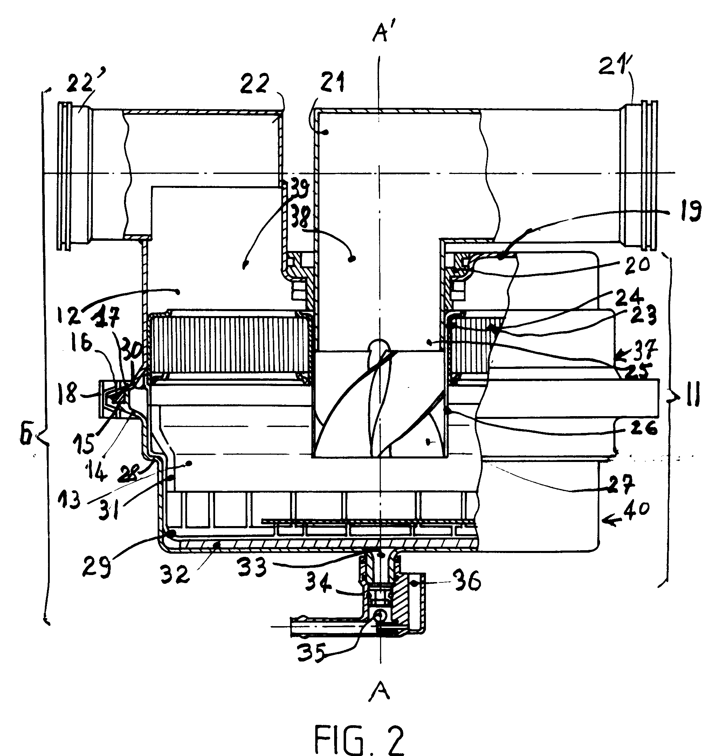

L'épurateur 6 est représenté en coupe partielle sur la Fig. 2. Il se présente extérieurement sous l'aspect d'une boîte 11 formée de deux demi-boîtes, l'une dite haute 37, l'autre dite basse 40, séparables suivant un plan perpendiculaire à l'axe A' A de la dite boîte. Cette dernière comporte à sa périphérie supérieure 14 une rainure circulaire 15 munie d'un joint en élastomère 16 sur lequel prend appui la bordure inférieure 17 de la demi-boîte haute 37. Les deux demi-boîtes 37, 40, sont solidarisées de façon étanche par un collier 18 manoeuvrable de façon classique à l'aide d'un levier et d'un ressort (non référencé). La demi-boîte 37 détermine une chambre haute 12 tandis que la demi-boîte 40 détermine une chambre basse 13. Le plafond 19 de la demi-boîte haute 37 est percé de deux orifices, l'un 38 au centre, l'autre 39 à proximité (dans la couronne). Dans l'orifice 38 est monté un support cylindrique 20 assurant l'assujettissement étanche de la conduite 21, faisant un coude à angle droit, avec une extrémité libre 21'. La conduite 21 est facilement orientable pour son raccordement à la portion 5 de conduite solidaire du séparateur 3.

De l'orifice 39 part un tube 22 faisant également un coude, dont l'extrémité 22' est raccordée à la portion 7 du tube d'évacuation vers le pompe 8 et/ou l'orifice 9 de communication vers l'extérieur.

Le filtre à coalescence 23 est en forme de couronne ou de disque épais avec un grand trou et est enchâssé dans un carter 24 de même forme. Son épaisseur est fonction de nombreux paramètres, notamment la vitesse de circulation des fluides; elle peut être comprise entre cinq millimètres et vingt centimètres. Le filtre 23 est consitué par un empilage de nappes faites de réseaux de fils plastiques ou métalliques, par exemple tricotés, ou de toute autre manière.

Dans le trou 25 du disque est serti un cylindre creux 26 le dépassant vers le bas et dans lequel est fixée une pièce 27 en forme d'hélice. Le carter 24 avec son filtre 23 et l'hélice 27 est enfoncé de bas en haut (selon la figure) dans l'embouchure de la partie haute 37 de la boîte 11, jusqu'à ce que l'hélice 27 bute sur te pourtour du tube 21.

La Fig. 4 montre en perspective éclatée le filtre 23 et son carter 24. La partie supérieure 41 de ce carter 24 a ta forme générale d'un couvercle à rabat, dont te fond est percé de plusieurs orifices circulaires 42 par exemple six. La partie inférieure 43 de ce carter 24 est en forme générale de roue à rayons présentant de grands espaces fibres 44. Le filtre 23 est prisonnier dans la partie supérieure 41 dans laquelle pénètre aussi la partie inférieure 43 de maintien. L'ensemble du filtre 23 et de son carter 24 constitue une cartouche, dont la superficie totale des orifices 42 de ta partie supérieure 41 est inférieure à la superficie des espaces (44) de la partie inférieure 43.

La demi-boîte basse 40 présente une chambre basse 13 ouverte vers te haut, dont la paroi comporte un appui circulaire 28. Dans cette chambre 13 est disposé un panier 29 ayant une configuration périphérique adaptée pour lui permettre de reposer sur l'appui circulaire 28, ainsi que cela est bien visible sur la Fig. 2.

La bordure supérieure 30 du panier 29 tend à repousser le support 24 dans la partie haute 37 de la boîte 11.

Le panier 29, et notamment son fond est ajouré, et est muni de moyens pour piéger les impuretés et les liquides tombant de l'hélice 27 et du filtre 23. Pour guider les gouttelettes qui ruissellent le long de la paroi, et éviter que les liquides récupérés soient entraînés par le courant de fluide gazeux, il est prévu d'appliquer une gaine 31, faite d'un matériau à alvéoles communicantes sur la dite paroi. Le fond du panier 29 est muni d'une pièce 32 en une matière absorbant les liquides comme une mousse à pores ouverts.

Le fond de la partie basse 40 de la boîte 11 est percé en sa partie axiale 33, ou à sa partie la plus basse, pour ajuster un éjecteur 34 à clapet anti-retour 35. Pour permettre le fonctionnement de l'éjecteur 34 et fournir l'énergie, ce dernier comporte une arrivée d'air 36 d'entraînement (Venturi).

Sur la sortie de l'éjecteur 34, un tuyau 10 est fixé pour reconduire les liquides et matières recueillis jusque dans la canalisation 2. L'énergie nécessaire à ce retour est fourni par l'éjecteur grâce à un effet Venturi.

Des variantes de réalisation sont possibles sans pour cela sortir du cadre de l'invention.

L'hélice 27 pourraît être montée à la base de la conduite 21 éventuellement prolongée. Il est également possible de solirariser le carter 24 et le filtre 23 avec le panier 29. L'ensemble formé par le panier et le filtre constituant alors un seul élément amovible facilement manipulable.

D'une manière générale, les éléments internes de l'épurateur 6 comprenant le carter 24 et son filtre 23, l'hélice 27 et le panier 29 peuvent être montés séparément ou liés entre eux suivant les différentes combinaisons possibles

De l'éjecteur 34 part un tuyau de recyclage 10 débouchant dans la canalisation 2 ou au sommet de la cuve. Ainsi lorsque la pièce 32 fixée sous le panier est gorgée de liquide, ce dernier peut être évacué au fur et à mesure par le tuyau 10 de recyclage sans devoir changer le panier. Le tuyau 10 peut ramener les liquides soit dans la canalisation 2 soit au sommet de la cuve 4, éventuellement à l'aide d'une vanne à trois voies 45.

Dans l'installation décrite :

– on évacue les fluides chargés par une canalisation 2,

– on sépare grossièrement les fluides gazeux 3 des matières solides et liquides qui tombent dans la cuve 4,

– on épure les fluides gazeux en retirant les liquides et autres impuretés,

– on évacue les gaz épurés dans l'atmosphère extérieure sous basse pression,

– on recueille les liquides et autres impuretés à la base d'un épurateur

– les liquides recueillis qui s'écoulent sont renvoyés en amont de la cuve 4 de rétention, ou dans celle-ci.

L'énergie motrice nécessaire au retour des liquides et impuretés de l'éjecteur 34 à la canalisation 2 ou à la cuve 4 provient de la différence de pression entre la cuve 4 et l'alimentation en air de l'éjecteur pouvant provenir de l'environnement ambiant à pression normale.

**Revendications**

1. Installation à dépression (notamment pour aéronefs) pour traiter des fluides chargés, issus de sanitaires, comprenant des gaz, des matières solides et liquides, comportant notamment au moins une canalisation (2) d'amenée des dits fluides chargés reliée aux sanitaires, une cuve (4) de rétention reliée à la dite canalisation (2) pour récupérer les matières solides et liquides, une conduite (5) d'évacuation des gaz dont une extrémité débouche au-dessus de la cuve (4), installation caractérisée par le fait que l'autre extrémité de la dite conduite (5) d'évacuation des gaz débouche dans un épurateur (6) relié d'une part à l'air extérieur sous pression réduite par un tube (7) pour évacuer les gaz épurés et, d'autre part à la canalisation (2) ou à la cuve (4) d'amenée par un tuyau (10) de recyclage véhiculant les impuretés recueillies par le dit épurateur (6).

2. Installation à dépression selon la revendication 1, caractérisée par le fait que la cuve (4) est sumrmontée d'une enceite (3 dans laquelle débouchent la ou les canalisations (2) d'amenée des fluides chargés et la conduite (5) d'évacuation des gaz vers l'épurateur (6).

3. Installation à dépression selon la revendication 2, caractérisée par le fait que l'enceinte (3) est un cyclone dont le centre est occupé par l'embouchure de la conduite (5) d'évacuation des gaz vers l'épurateur (6).

4. Installation à dépression selon l'une quelconque des revendications précédentes, caractérisée par le fait qu'une pompe (8) est montée sur le tube (7) d'évacuation des gaz épurés par l'épurateur (6).

5. Epurateur (6) de fluide gazeux pour installation sanitaire à dépression selon l'une quelconque des revendications précédentes, constitué par une boîte (11) cylindrique fermée à axe vertical A' A, avec une entrée (38) des fluides à épurer, et une sortie (40) des fluides épurés, des moyens internes (23) pour filtrer les fluides, des moyens (32) pour rassembler les impuretés dans le fond de la boîte, dispositif épurateur caractérisé par le fait que la boîte (11) comporte deux chambres parallèles dites haute (12) et basse (13), un filtre (23) horizontal à coalescence séparant les deux chambres (12, 13), une conduite (21) axiale d'amenée des fluides à épurer traversant un orifice axial d'entrée (38), la chambre haute (12) et le filtre (23) pour déboucher dans la chambre basse (13), un moyen (34) d'évacuation des impuretés rassemblées à la partie inférieure de la boîte (11) et un tube (22) évacuant les fluides gazeux épurés à partir d'un orifice (39) de sortie prévue au sommet de la chambre haute (13).

6. Epurateur selon la revendication 5, caractérisé par le fait que la boîte (11) est constituée de deux demiboîtes dites haute (37) et basse (39) munies de moyens pour les solidariser l'une sur l'autre de façon étanche tout en tolérant leur séparation suivant un plan perpendiculaire à l'axe A' A, la demi-boîte haute (37) en forme générale de couvercle à grande jupe détermine la chambre haute (12) et comporte les orifices d'entrée (38) et sortie (40) percés dans son plafond (19), la demi-boîte basse (39) détermine la chambre basse (13) dont le fond comporte un trou (33) d'évacuation des liquides et impuretés.

7. Epurateur selon la revendication 6, caractérisé par le fait que la paroi latérale de la demi-boîte basse (39) de la boîte (11) comporte un appui circulaire interne (28).

8. Epurateur selon les revendications 5 ou 6, caractérisé par le fait que la conduite axiale d'amenée (21) est coudée extérieurement à la boîte (11), l'orifice axial (38) de la boîte (11) est muni d'un support cylindrique (20) assurant l'assujettisssement étanche de la conduite (21), la conduite peut être tournée dans le support (20) de façon à orienter convenablement l'extrémité coudée (21).

9. Epurateur selon l'une quelcoque des revendications précédentes, caractérisé par le fait que le filtre (23) à coalescence est en forme de disque épais avec un trou axial (25) et est enchâssé dans un carter (24) avec également un trou central.

10. Epurateur selon la revendication 9, caractérisé par le fait que dans un trou axial du disque (25) est sertie une pièce (27) en forme d'hélice.

11. Epurateur selon l'ensemble des revendications précédentes, caractérisé par le fait que l'ensemble formé par le carter (24) avec son filtre (23) et l'hélice (27) est enfoncé de bas en haut dans la demi-boîte haute (37) de la boîte (11) jusqu'à ce que l'hélice bute sur le pourtour inférieur du tube (21).

12. Epurateur selon la revendication 8, caractérisé par le fait qu'une pièce en forme d'hélice (27) est fixée dans l'embouchure du tube (21).

13. Epurateur selon les revendications 5 à 9 et la revendication 12, caractérisé par le fait que le carter (24) avec son filtre (23) est enfoncé de bas en haut dans l'embouchure de la demi-boîte haute (37) de la boîte (11), la partie inférieure de la conduite (21) traversant de façon étanche le trou (25) du disque.

14. Epurateur selon l'une quelconque des revendications précédentes, caractérisé par le fait que le carter (24) est formé par une partie supérieure (41) percée d'orifices (42) et une partie inférieure (43) avec de larges espaces libres (44), la superficie totale des orifices (42) étant inférieure à celle des espaces (43).

15. Epurateur selon l'une quelconque des revendications précédentes, caractérisé par le fait qu'un panier (29) est situé dans la chambre basse (13) et est munie de moyens pour rassembler les liquides et impuretés.

16. Epurateur selon la revendication 15, caractérisé par le fait qu'il comporte un panier (29) dont la périphérie est agencée pour reposer sur l'appui (28) de la demi-boîte basse (39) de la boîte (11).

17. Epurateur selon la revendication 15 ou 46, caractérisé par le fait qu'il comporte une gaine (31) appuyée sur les parois latérales du panier (29) en une matière se laissant imprégner par les gouttelettes de liquide.

18. Epurateur selon l'une quelconque des revendications précédentes, caractérisé par le fait que le fond du panier (29) est muni d'une pièce (32) en une matière se laissant imprégner par les gouttelettes de liquide.

19. Epurateur selon l'une quelconque des revendications précédentes, caractérisé par le fait que la partie inférieure du fond de la demi-boîte basse (35) de la boîte (11) comporte un ajutage (33) muni d'un éjecteur (34) avec entrée (34) d'air ambiant intérieur au véhicule, engendrant une force motrice d'entraînement des impuretés dans le tuyau de recyclage (10) de l'éjecteur (34) à la canalisation (2) ou à la cuve (4).

20. Epurateur selon la revendication 19, caractérisé par le fait que l'éjecteur (34) comporte un clapet anti-retour (35).

21. Epurateur (6) pour installation sanitaire à dépression, selon l'une quelconque des revendications 9, 10, 11, caractérisé par le fait que le filtre (23) est fixé à la partie supérieure du panier (29) et l'ensemble constitue un bloc facilement interchangeable.

FIG. 1

FIG. 4

FIG. 2

FIG. 3

## European Patent Office

# EUROPEAN SEARCH REPORT

Application Number

EP    91 40 2110

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | US-A-3 733 617 (BENNETT) <br> * column 2, line 25 - line 34; figure 3 * <br> --- | 1-4 | E03D9/10 <br> E03D5/00 <br> B64D11/02 <br> C02F9/00 |
| A | US-A-3 974 075 (SAIGH ET AL) <br><br> ----- | | |

TECHNICAL FIELDS SEARCHED (Int. Cl.5 )

E03D
B64D
C02F
E03F

The present search report has been drawn up for all claims

| Place of search | Date of completion of the search | Examiner |
|---|---|---|
| THE HAGUE | 23 OCTOBER 1991 | VAN BEURDEN J.J.C.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)